# EUROPEAN PATENT APPLICATION

(11) **EP 4 671 841 A1**
(43) Date of publication of application: **31.12.2025**
(21) Application number: 24774122.6
(22) Date of filing: 19.03.2024
(51) Int. Cl.: G02B 6/42

(54) **OPTICAL MODULE AND OPTICAL COMMUNICATION SYSTEM**

(30) Priority: 22.03.2023 CN 202310294663
(71) Applicant: HUAWEI TECHNOLOGIES CO., LTD., Shenzhen, Guangdong 518129 (CN)
(72) Inventor: CHENG, Ming, Shenzhen, Guangdong 518129 (CN); YANG, Chengpeng, Shenzhen, Guangdong 518129 (CN); HUANG, Xiangji, Shenzhen, Guangdong 518129 (CN)
(74) Representative: Goddar, Heinz J.
(86) International application number: PCT/CN2024/082535
(87) International publication number: WO 2024/193557

(57) **Abstract**

Embodiments of this application provide an optical module and an optical communication system, to resolve a technical problem of low heat dissipation efficiency of an optical module. The optical module includes a first device, a second device, and a housing cover. The housing cover includes a first cavity and a second cavity. A working medium in the first cavity is used to dissipate heat from the first device, and a working medium in the second cavity is used to take away heat of the second device. For example, heat of the first device is transferred by means of heat transfer to a surface of the housing cover close to the first device, the heat enters the first cavity via the surface, the working medium in the first cavity transfers the heat to a cavity surface of the first cavity facing away from the first device, and then the heat is transferred to the outside of the optical module via the surface of the housing cover facing away from the first device. The use of separate heat dissipation of the first device and the second device allows for a reduction in power density (power consumption per unit area) on the surface of the housing cover, thereby reducing a dry contact temperature difference, and improving heat dissipation efficiency of the optical module.

## Description

This application claims priority to Chinese Patent Application No. 202310294663.8, filed with the China National Intellectual Property Administration on March 22, 2023 and entitled "OPTICAL MODULE AND OPTICAL COMMUNICATION SYSTEM", which is incorporated herein by reference in its entirety.

### TECHNICAL FIELD

This application relates to the field of communication technologies, and in particular, to an optical module and an optical communication system.

### BACKGROUND

An optical module is one of the most essential components in the field of optical network technologies, and its function is to convert an optical signal to an electrical signal, and vice versa, inside the module. In recent years, as performance of an optical module becomes increasingly strong, power consumption of the optical module becomes increasingly high. As a result, heat dissipation of the optical module becomes increasingly difficult, and there is a huge heat dissipation challenge.

Currently, heat dissipation of the optical module is implemented by providing a heat sink outside the optical module. In this heat dissipation method, due to the incomplete contact between the surfaces of the optical module and the heat sink, heat can be transferred only through dry contact, resulting in a relatively large thermal contact resistance and leading to low heat dissipation efficiency of the optical module.

### SUMMARY

Embodiments of this application provide an optical module and an optical communication system, to resolve a technical problem of low heat dissipation efficiency of an optical module.

To achieve the foregoing objective, the following technical solutions are used in embodiments of this application.

According to a first aspect, an optical module is provided. The optical module includes a housing body and a housing cover that are disposed opposite to each other, a first device, and a second device. The housing body includes a first surface close to the housing cover, and an accommodation groove extending in a direction away from the housing cover is provided on the first surface. The first device and the second device are disposed in the accommodation groove. A first cavity and a second cavity are formed in the housing cover, a working medium is provided in both the first cavity and the second cavity, and the first cavity and the second cavity are disposed in a direction parallel to the housing cover. The first device and the first cavity are disposed opposite to each other, and the second device and the second cavity are disposed opposite to each other.

Based on the foregoing description of the structure of the optical module provided in this embodiment of this application, it can be learned that the optical module includes the first device, the second device, and the housing cover configured to dissipate heat from the first device and the second device. The housing cover includes a first cavity and a second cavity. A working medium in the first cavity is used to dissipate heat from the first device, and a working medium in the second cavity is used to take away heat of the second device. For example, heat of the first device is transferred by means of heat transfer to a surface of the housing cover close to the first device. Because the first device and the first cavity are disposed opposite to each other, the heat enters the first cavity via the surface, the working medium in the first cavity transfers the heat to a cavity surface of the first cavity facing away from the first device, and then the heat is transferred to the outside of the optical module via the surface of the housing cover facing away from the first device. Likewise, heat of the second device is transferred by means of heat transfer to a surface of the housing cover close to the second device. Because the second device and the second cavity are disposed opposite to each other, the heat enters the second cavity via the surface, the working medium in the second cavity transfers the heat to a cavity surface of the second cavity facing away from the second device, and then the heat is transferred to the outside of the optical module via the surface of the housing cover facing away from the second device. Compared with a method of disposing only a heat sink outside an optical module, the optical module provided in this embodiment of this application uses the structure of the housing cover to implement separate heat dissipation of the first device and the second device, thereby increasing the ways of heat dissipation and effectively improving heat dissipation efficiency of the optical module. In addition, the housing cover provided in this embodiment of this application, as a structural part of the optical module, can further achieve a heat dissipation effect, allowing for the effective use of the structural part.

Moreover, in this embodiment of this application, providing the first cavity and the second cavity allows for a reduction in power density (power consumption per unit area) on the surface of the housing cover, thereby improving heat dissipation efficiency of the optical module.

In a feasible implementation of the first aspect, the housing cover includes a first cover plate and a second cover plate that are disposed opposite to each other, and the first cover plate is disposed on a side of the second cover plate that is away from the first device. The second cover plate includes a second surface close to the first cover plate, and a first groove that is recessed in a direction away from the first cover plate is provided on the second surface. The first cover plate and the second cover plate are connected in a sealed manner, so that the first groove of the second cover plate and the first cover plate jointly enclose the first cavity.

In a feasible implementation of the first aspect, the housing cover further includes a first capillary layer, and the first capillary layer is provided on a surface of the first groove.

Providing the first capillary layer allows for circulation of the working medium in the cavity, so that a better heat dissipation effect can be achieved.

In a feasible implementation of the first aspect, the housing cover further includes a second capillary layer and a third capillary layer. The first cover plate includes a third surface that is close to the second cover plate and opposite to the second surface, and the second capillary layer is formed on the third surface. The third capillary layer is formed on the second surface of the second cover plate.

Providing the second capillary layer and the third capillary layer allows for circulation of the working medium in the housing cover, so that a better heat dissipation effect can be achieved.

In a feasible implementation of the first aspect, a support pillar is provided in the first groove, and the support pillar extends from a bottom surface of the first groove to the first cover plate.

In a feasible implementation of the first aspect, the housing cover further includes a fourth capillary layer, and the fourth capillary layer is formed on a side surface of the support pillar.

Providing the fourth capillary layer allows for circulation of the working medium in the cavity, so that a better heat dissipation effect can be achieved.

In a feasible implementation of the first aspect, the housing cover further includes a thermal insulation structure provided between the first cavity and the second cavity. The thermal insulation structure is configured to block heat exchange between the first cavity and the second cavity.

Heat exchange between the first cavity and the second cavity is blocked by providing the thermal insulation structure. The heat from the electrical chip does not cause thermal baking to the optical devices, which is conducive to protecting the devices and improving the performance of the optical module.

In a feasible implementation of the first aspect, the thermal insulation structure includes a thermal insulation hole or a thermal insulation member made of a thermal insulation device.

In a feasible implementation of the first aspect, the thermal insulation hole runs through the housing cover.

Providing the thermal insulation hole that runs through the housing cover makes the first cavity and the second cavity not in communication with each other, which is conducive to blocking heat exchange between the first cavity and the second cavity, thereby protecting the devices and improving the performance of the optical module.

In a feasible implementation of the first aspect, the optical module further includes a circuit board. The circuit board is disposed at a bottom of the accommodation groove. Both the first device and the second device are disposed on the circuit board, and the first device and the second device are located on a same side of the circuit board.

In a feasible implementation of the first aspect, the optical module further includes a thermally conductive layer. The thermally conductive layer is disposed between the first device and the housing cover; and/or the thermally conductive layer is disposed between the second device and the housing cover.

Providing the thermally conductive layer allows for better heat transfer to the housing cover.

In a feasible implementation of the first aspect, a cross-section of the support pillar gradually decreases from the bottom surface of the first groove to the first cover plate.

This is conducive to increasing the contact area with the working medium, thereby improving heat dissipation efficiency.

According to a second aspect, an optical communication system is provided. The optical communication system includes the optical module provided in the first aspect.

In the optical communication system, the optical module provided in the first aspect is disposed. The optical module has good heat dissipation performance and can meet requirements of various high power consumption scenarios of the optical communication system.

### BRIEF DESCRIPTION OF DRAWINGS

FIG. 1 is a diagram of a structure of an optical communication system according to an embodiment of this application;
FIG. 2 is a diagram of a structure of an optical module and a heat sink according to an embodiment of this application;
FIG. 3 is a diagram of a structure of an optical module and a heat sink according to an embodiment of this application;
FIG. 4 is a diagram of dry contact;
FIG. 5 is a diagram of a structure of an optical module according to an embodiment of this application;
FIG. 6 is a diagram of a structure of a housing body of an optical module according to an embodiment of this application;
FIG. 7 is a diagram of a structure of a housing cover of an optical module according to an embodiment of this application;
FIG. 8 is an exploded diagram of the housing cover of the optical module shown in FIG. 7;
FIG. 9 is a schematic cross-sectional view, along A-A, of the housing cover of the optical module shown in FIG. 7;
FIG. 10 is a diagram of a structure of a housing cover of an optical module according to an embodiment of this application;
FIG. 11 is a diagram of a structure of a housing cover of an optical module according to an embodiment of this application;
FIG. 12 is an exploded diagram of the housing cover of the optical module shown in FIG. 11;
FIG. 13 is a schematic cross-sectional view, along B-B, of the housing cover of the optical module shown in FIG. 11;
FIG. 14 is a diagram of a structure of an optical module according to an embodiment of this application; and
FIG. 15 is a diagram of a structure of an optical module according to an embodiment of this application.

### Reference numerals:

1: optical communication system,
100: optical switch,
111: light-emitting component, 112: modulator, 113: photoelectric detector,
120: fiber array unit, 121: output fiber, 122: input fiber,
130: converter, 131: optical digital signal processing module, 132: driver module, 133: photoelectric detector,
200: optical module, 200a: interface, 200a1: first port, 200a2: second port,
210: housing body, 210a: accommodation groove, 210b: fastening pillar, 211: first surface,
220: housing cover, 221: first cavity, 222: second cavity, 223: support pillar, 224: first capillary layer, 225: third capillary layer, 226: second capillary layer, 227: fourth capillary layer, 228: thermal insulation structure, 220a: first cover plate, 220al: third surface, 220b: second cover plate, 220b0: bottom surface, 220b1: first groove, 220b2: second groove, 220b3: second surface, 220b4: surface, 220c: mounting hole,
230: circuit board,
240: first device,
250: second device,
260: thermally conductive layer,
270: fastener,
280: solder ball,
300: slide rail,
400: heat sink,
500: bracket.

### DESCRIPTION OF EMBODIMENTS

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. Persons skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being preferred or having more advantages than another embodiment or design scheme. Exactly, use of the terms such as "example" or "for example" is intended to present a related concept in a specific manner for ease of understanding.

Embodiments of this application provide an optical communication device capable of conversion between optical and electrical signals and conduction of optical signals. For example, the optical communication device may be an optical module. The optical module may be a long-range communication module, a short-range communication module, or the like. The long-range communication module includes a coherent communication module, and the short-range communication module includes a constant-amplitude communication module. A specific form of the optical communication device is not particularly limited in embodiments of this application.

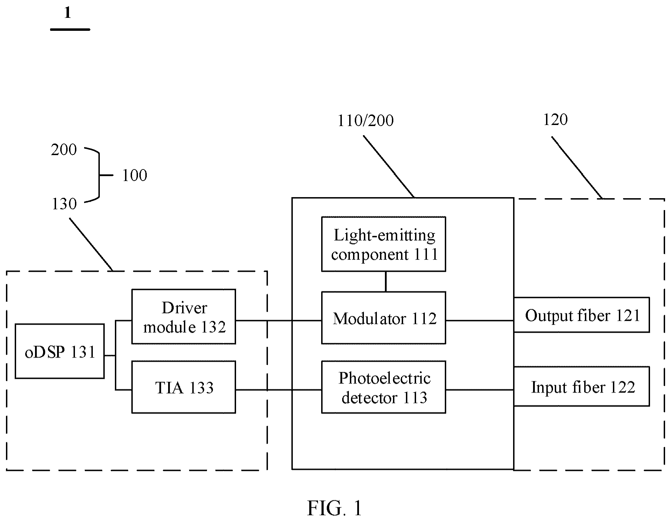

The optical communication device may be used in an optical communication system. For example, short-range communication modules may be used in a data center, to cooperatively complete data exchange between servers at different layers in the data center. FIG. 1 is a diagram of a structure of an optical communication system according to an embodiment of this application.

As shown in FIG. 1, in some embodiments, an optical communication system 1 includes an optical switch 100. The optical switch 100 may be used for data exchange between servers at different layers in a large-scale data center, to increase bandwidth and significantly reduce extra energy consumption caused by switching network cabling. The optical switch 100 includes an optical module 200, a converter 130, and a fiber array unit (fiber array unit, FAU) 120 for securing a fiber array.

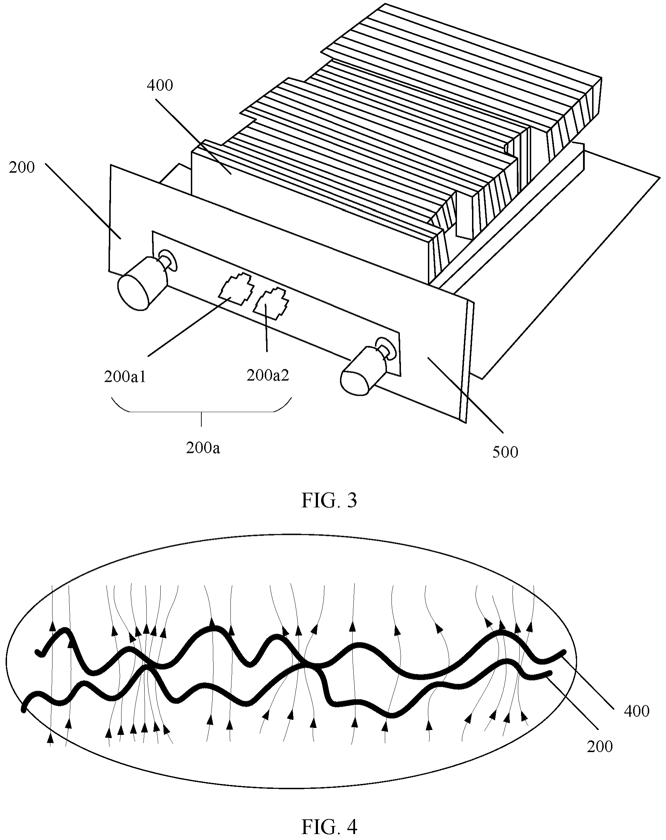

The optical module 200 is a functional module for mutual conversion between an optical signal and an electrical signal in a network device. In one aspect, the optical module 200 and the fiber array may be connected to each other via the interface 200a. In some embodiments, the fiber array unit 120 includes an output fiber 121 for receiving an optical signal output by the optical module 200, and an input fiber 122 for inputting an optical signal to the optical module 200. The output fiber 121 and the input fiber 122 may be plugged into the optical module 200 via different interfaces, respectively. As shown in FIG. 1 and FIG. 3, for example, the output fiber 121 is plugged into the optical module 200 via a first port 200al, and the input fiber 122 is plugged into the optical module 200 via a second port 200a2. In another aspect, the optical module 200 is further connected to the converter 130. The converter 130 is configured for processing and generation of an electrical signal.

In this way, cooperation of the optical module 200, the converter 130, and the fiber array allows the optical switch 100 to implement signal processing and conduction, to adapt to various communication scenarios.

For a scenario such as high baud rate communication integrating transmission and reception, in some embodiments, the optical module 200 may include a modulator 112 and a photoelectric detector 113. The converter 130 may include an optical digital signal processing (optical digital signal processing, oDSP) module 131, a driver (driver) module 132, and a trans-impedance amplifier (trans-impedance amplifier, TIA) 133.

In one aspect, the photoelectric detector 113 may be connected to the input fiber 122. After receiving an optical signal from the input fiber 122, the photoelectric detector 113 may generate a corresponding current signal based on the optical signal, so as to process the current signal. The trans-impedance amplifier 133 is connected to the photoelectric detector 113 and configured to perform trans-impedance amplification on the current signal generated by the photoelectric detector 113, so as to obtain a voltage signal. The oDSP module 131 may be connected to the trans-impedance amplifier 133 and configured to control the trans-impedance amplifier 133 to amplify the electrical signal and process the amplified electrical signal.

In another aspect, the oDSP module 131 is connected to the driver module 132 and configured to control the driver module 132 to generate a modulation signal. The driver module 132 is connected to the modulator 112 and configured to provide the modulation signal, so that the modulator 112 uses the modulation signal to modulate a to-be-modulated optical signal, and loads the modulation signal as an electrical signal to the to-be-modulated optical signal. The modulator 112 may be connected to the output fiber 121. After modulating the to-be-modulated optical signal, the modulator 112 may send a modulated optical signal through the output fiber 121. The to-be-modulated optical signal may be provided by a light-emitting component 111.

It may be understood that FIG. 1 schematically shows only some possible components included in the optical communication system, and actual shapes, actual sizes, actual positions, and actual construction of these components are not limited by FIG. 1.

An optical module is one of the most essential components in the field of optical network technologies. A device in the optical module has relatively high power consumption during operation, resulting in an increase in the temperature of the component. When the temperature of the component is too high, the performance of the component may be affected, or even the component may be damaged.

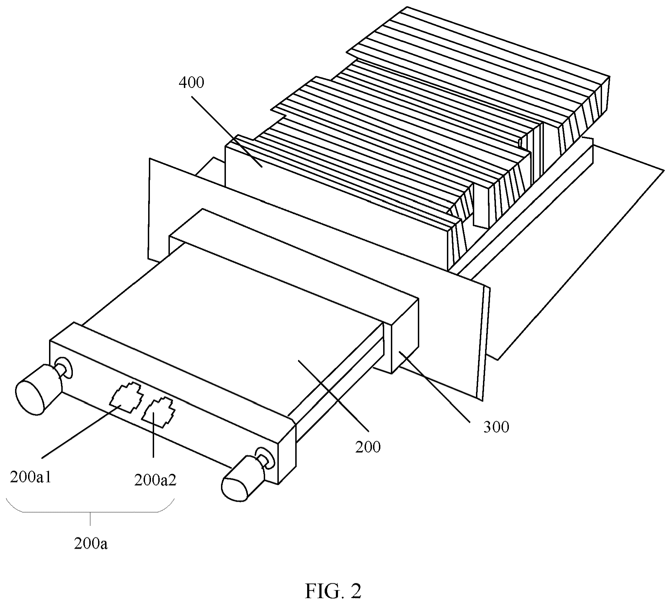

To resolve a heat dissipation problem of the optical module, as shown in FIG. 2, in some embodiments, a heat sink 400 is provided outside the optical module 200. The heat sink 400 may be made of various materials, for example, of metal such as die casting aluminum, die casting zinc, machined aluminum, or machined copper, with a thermal conductivity being between 95 w/mk and 385 w/mk.

In this way, heat from the optical module 200 can be transferred to the heat sink 400, and the heat sink 400 can quickly transfer the heat to air for heat dissipation of the optical module 200, thereby ensuring normal operation of the optical module 200.

For higher heat dissipation efficiency of the heat sink 400, as shown in FIG. 2, in some embodiments, the heat sink 400 may include a plurality of heat sink fins. These heat sink fins increase a heat dissipation area, resulting in an improvement in the heat dissipation efficiency of the heat sink.

The optical module 200 and the heat sink 400 have a plurality of connection methods.

For example, in some embodiments, as shown in FIG. 2, for ease of use and maintenance, the optical module 200 features a pluggable design, meaning that the optical module 200 can be connected to a slide rail 300 in a pluggable manner. The heat sink 400 may be fastened to the slide rail 300. When the optical module 200 is inserted into the slide rail 300, the optical module 200 is in contact with the heat sink 400. When the optical module 200 is removed from the slide rail 300, the optical module 200 is separated from the heat sink 400.

For another example, as shown in FIG. 3, in some other embodiments, the optical module 200 may also be unpluggable; that is, the optical module 200 may be fastened to a bracket 500. The heat sink 400 is disposed opposite to the optical module 200, and the heat sink 400 is also fastened to the bracket 500. It may be understood that, during securing of the heat sink 400 and the optical module 200, to ensure that heat from the optical module 200 can be transferred to the heat sink 400 as quickly as possible, a larger contact surface between the heat sink 400 and the optical module 200 is better. It may be understood that, for better heat conduction between the heat sink 400 and the optical module 200, in some embodiments, a thermally conductive material may be used between the optical module 200 and the heat sink 400. One side of a film layer formed by the thermally conductive material can be fully attached to the optical module 200, and the other side thereof can be fully attached to the heat sink 400. In this way, heat from the optical module 200 can be completely transferred to the heat sink 400 through the thermally conductive material, without causing hot spots, thereby ensuring heat dissipation performance.

For the optical module 200 and the heat sink 400 shown in FIG. 2, due to insertion and removal actions of the optical module 200, it is not suitable to dispose a thermally conductive material between the heat sink 400 and the optical module 200. In this case, the optical module 200 is in direct contact with the heat sink 400. As shown in FIG. 4, heat can be transferred only by means of dry contact between the optical module 200 and the heat sink 400, which causes a thermal contact resistance. Causes of "dry contact heat transfer" include the following: when the optical module 200 is in direct contact with the heat sink 400, there is a gap between the optical module 200 and the heat sink 400; in addition, because the contact surface between the optical module 200 and the heat sink 400 is not absolutely flat, the contact surface has surface roughness, that is, the contact surface is uneven. Therefore, there is no complete contact microscopically, causing a relatively large thermal contact resistance, which is not conducive to heat dissipation.

As performance of an optical module becomes increasingly strong, power consumption of the optical module becomes increasingly high. As a result, heat dissipation of the optical module becomes increasingly difficult. The heat dissipation problem of the optical module cannot be resolved solely by using a heat sink.

To ensure heat dissipation efficiency of an optical module, an embodiment of this application provides an optical module. Providing a heat dissipation cavity in a housing cover of the optical module allows for a further improvement in the heat dissipation efficiency of the optical module.

The following provides a description with reference to the accompanying drawings.

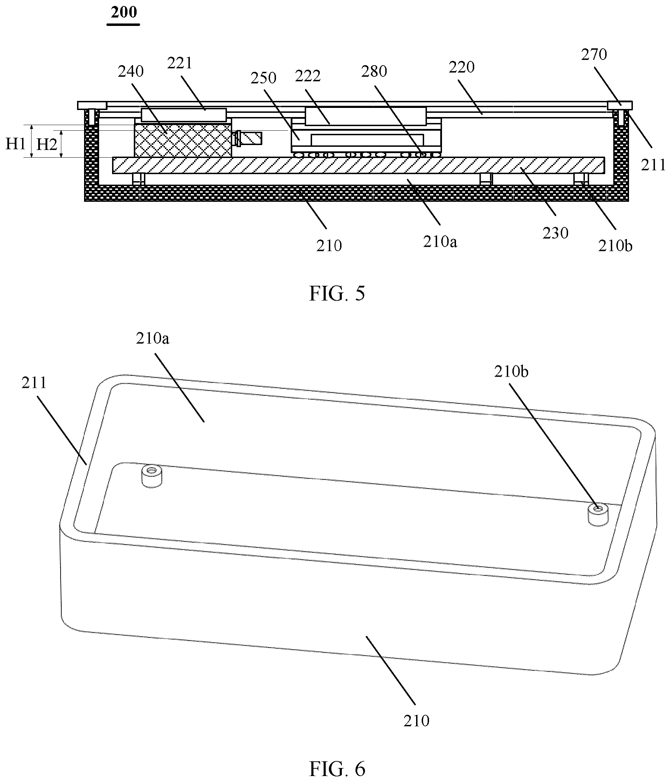

FIG. 5 is a diagram of a structure of an optical module according to an embodiment of this application. As shown in FIG. 5, in some embodiments, the optical module 200 includes a housing body 210 and a housing cover 220 that are disposed opposite to each other, a first device 240, and a second device 250.

The housing body 210 is configured to provide space for disposing electronic devices and protect the electronic devices, such as the first device 240 and the second device 250, disposed in the housing body 210. The housing body 210 includes a first surface 211 close to the housing cover, and an accommodation groove 210a extending in a direction away from the housing cover 220 is provided on the first surface 211. The housing body 210 may have a plurality of shapes. For example, in an implementation, the housing body 210 may be an uncovered cubic box structure shown in FIG. 6. The shape of the housing body 210 is not limited in this application.

The first device 240 and the second device 250 are disposed in the accommodation groove 210a. The first device 240 and the second device 250 are disposed in the accommodation groove 210a in a plurality of manners. For example, in some embodiments, the first device 240 and the second device 250 may be directly fixed at the bottom of the accommodation groove 210a. For another example, in some other embodiments, as shown in FIG. 5 and FIG. 6, the optical module 200 further includes a circuit board 230. A fastening pillar 210b is provided at the bottom of the accommodation groove 210a. The circuit board 230 may be fixed onto the fastening pillar 210b in the accommodation groove 210a by using a fastener. The first device 240 and the second device 250 are disposed on the circuit board 230. In an implementation, the first device 240 and the second device 250 each may be fastened to the circuit board 230 in a welding manner. For example, the second device 250 is fastened to the circuit board 230 in a welding manner, to form a solder ball 280. In an implementation, the first device 240 and the second device 250 are disposed on a same side of the circuit board 230. In a direction parallel to the first surface 211, the first device 240 and the second device 250 may be secured side by side in the accommodation groove 210a. It may be understood that, in a direction perpendicular to the first surface 211, a height H1 of the first device 240 and a height H2 of the second device 250 may be the same or different. This is not limited in this application.

The first device 240 may be an optical device, which can convert an electrical signal into an optical signal or convert an optical signal into an electrical signal, for example, the modulator 112 shown in FIG. 1 or the photoelectric detector 113 shown in FIG. 1. The second device 250 may be a silicon photonic chip, for example, a silicon photonic chip DR4 or a silicon photonic chip DR8. Specific implementations of the first device 240 and the second device 250 are not limited in this application.

In one aspect, the housing cover 220 is configured to cover the accommodation groove 210a of the housing body 210 to form a closed cavity. In this way, it is ensured that dust and the like do not enter the optical module 200, and it is ensured that the electronic devices disposed in the housing body 210 are not damaged by an external environment. In another aspect, the housing cover is configured to dissipate heat from the electronic devices disposed in the housing body 210, for example, to dissipate heat from the first device 240 and the second device 250.

The housing cover 220 and the housing body 210 are fastened in a plurality of manners. For example, as shown in FIG. 5, they may be connected by using a fastener 270. The fastener 270 may be a bolt. A through mounting hole 220c is provided in the housing cover 220, and the bolt passes through the mounting hole 220c to connect the housing cover 220 and the housing body 210. For another example, an adhesive may be used for connection.

The housing cover 220 includes a first cavity 221 and a second cavity 222. A working medium is provided in both the first cavity 221 and the second cavity 222. In the first cavity 221, the working medium can transfer energy by means of vapor-liquid phase change, so as to achieve an objective of temperature equalization and heat dissipation. The working medium may be a coolant. There may be a plurality of materials for the coolant, which, for example, may include a fluorinated liquid or may include water, methanol, alcohol, or acetone. In an implementation, after a sample restoration process of the optical module, a liquid can be injected into the first cavity 221 and the second cavity 222, followed by vacuum extraction and sealing.

The first cavity 221 and the second cavity 222 are disposed in a direction parallel to the housing cover 220. The first device 240 and the first cavity 221 are disposed opposite to each other, and the working medium in the first cavity 221 is used to dissipate heat from the first device 240. The second device 250 and the second cavity 222 are disposed opposite to each other, and the working medium in the second cavity 222 is used to take away heat of the second device 250.

In this way, when the first device 240 operates, heat of the first device 240 is transferred by means of heat transfer to a surface of the housing cover 220 close to the first device 240. Because the first device 240 and the first cavity 221 are disposed opposite to each other, the heat enters the first cavity 221 via the surface, the working medium in the first cavity 221 transfers the heat to a cavity surface of the first cavity 221 facing away from the first device 240, and then the heat is transferred to the outside of the optical module 200 via the surface of the housing cover 220 facing away from the first device 240, so as to complete heat dissipation of the first device 240.

Likewise, when the second device 250 operates, heat of the second device 250 is transferred by means of heat transfer to a surface of the housing cover 220 close to the second device 250. Because the second device 250 and the second cavity 222 are disposed opposite to each other, the heat enters the second cavity 222 via the surface, the working medium in the second cavity 222 transfers the heat to a cavity surface of the second cavity 222 facing away from the second device 250, and then the heat is transferred to the outside of the optical module 200 via the surface of the housing cover 220 facing away from the second device 250, so as to complete heat dissipation of the second device 250.

In this way, the housing cover of the optical module provided in this embodiment of this application not only exists as a structural part, but also implements heat dissipation by providing the first cavity and the second cavity. Compared with a method of disposing only a heat sink outside an optical module, this increases the ways of heat dissipation and effectively improves heat dissipation efficiency of the optical module. Moreover, providing the first cavity and the second cavity allows for a reduction in power density (power consumption per unit area) on the surface of the housing cover, thereby reducing a dry contact temperature difference, which is conducive to heat dissipation.

It may be understood that, when a heat sink is disposed outside the optical module, the heat sink should be disposed on a side close to the housing cover, and a larger contact area between the heat sink and the housing cover is more conducive to heat dissipation. In addition, to improve heat dissipation efficiency, it is ensured that the contact surface between the housing cover and the heat sink meet requirements for surface flatness and roughness, so that the heat sink and the housing cover are better attached to each other.

The following describes the structure of the housing cover in detail with reference to the accompanying drawings.

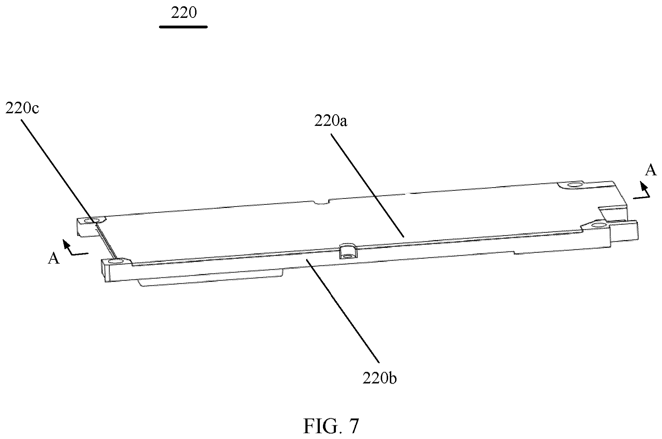

FIG. 7 is a diagram of a structure of a housing cover of an optical module according to an embodiment of this application. As shown in FIG. 5 and FIG. 7, in some embodiments, the housing cover 220 includes a first cover plate 220a and a second cover plate 220b that are disposed opposite to each other. The first cover plate 220a is disposed on a side of the second cover plate 220b facing away from the first device 240.

To obtain a better heat dissipation effect, a material of the first cover plate 220a may be copper. A material of the second cover plate 220b may be copper.

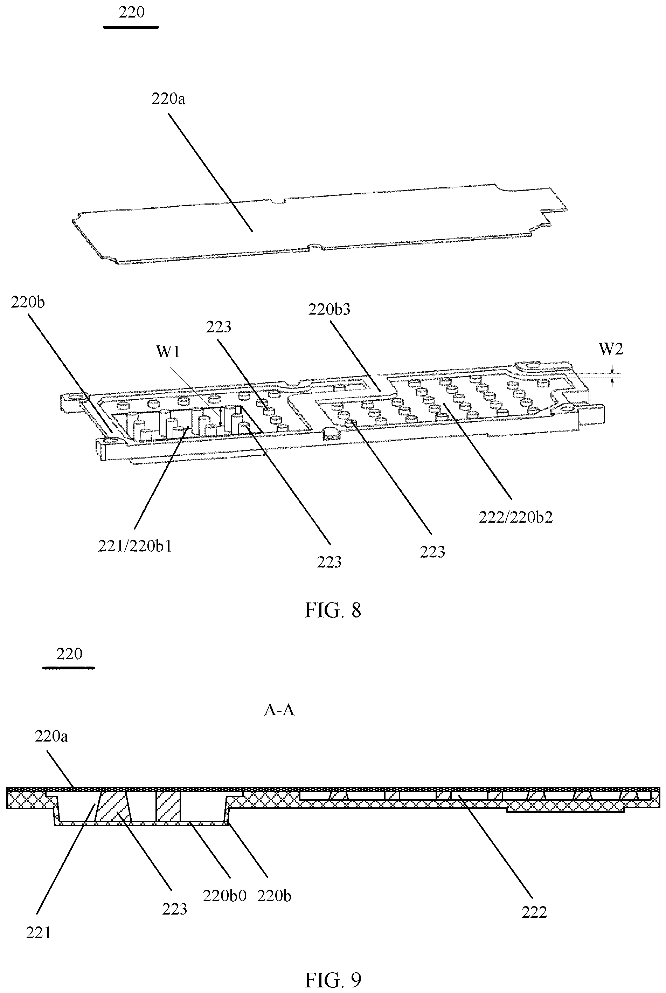

As shown in FIG. 8, the second cover plate 220b includes a second surface 220b3 close to the first cover plate 220a. A first groove 220b1 that is recessed in a direction away from the first cover plate 220a is provided on the second surface 220b3. The first cover plate 220a and the second cover plate 220b are connected in a sealed manner, so that the first groove 220b1 of the second cover plate 220b and the first cover plate 220a jointly enclose the first cavity 221. Similarly, as shown in FIG. 8, in some embodiments, a second groove 220b2 that is recessed in a direction away from the first cover plate 220a is provided on the second surface 220b3 of the second cover plate 220b. The first cover plate 220a and the second cover plate 220b are connected in a sealed manner, so that the second groove 220b2 of the second cover plate 220b and the first cover plate 220a jointly enclose the second cavity 222. In a direction perpendicular to the second surface 220b3, a depth W1 of the first groove 220b1 and a depth W2 of the second groove 220b2 may be the same or different. This is not limited in this application.

The first groove 220b1 may be of a plurality of shapes, for example, may be of a square shape or a circular shape. This is not limited in this application. In addition, the first groove 220b1 may also be a stepped groove shown in FIG. 9.

The first cover plate 220a and the second cover plate 220b may be connected in a plurality of manners. For example, the connection may be welding.

The following describes a feasible implementation of the first cover plate.

In an implementation, the first cover plate 220a may be a plat straight-plate structure; that is, no recessed structure is provided on the first cover plate 220a. Such a first cover plate 220a has a simple structure, is easy to manufacture, and is conducive to reducing costs.

In another implementation, the first cover plate 220a may be provided with a recessed structure opposite to the first groove 220b1, and the recessed structure may be recessed in a direction away from the second cover plate 220b. In this way, the first cavity 221 has a larger space.

The first cover plate 220a and the second cover plate 220b may be of a plurality of shapes, for example, may be square or circular.

It may be understood that the first cover plate and the second cover plate provided in this embodiment of this application are merely examples for describing feasible implementations of forming the first cavity and the second cavity in the housing cover, and do not constitute a limitation on the implementations of forming the first cavity and the second cavity. For example, in another implementation, the second cover plate may be a straight plate, and a recessed structure is formed in the first cover plate to form the first cavity.

In addition, compared with the first cover plate, the second cover plate is disposed closer to the first device, and is relatively close to another device disposed in the first groove. Therefore, a surface of the second cover plate close to the first device should avoid interference with the device in the first groove.

To ensure that the first cover plate and the second cover plate do not collapse, in some embodiments, as shown in FIG. 9, a support pillar 223 is provided in the first groove 220b1, and the support pillar 223 extends from a bottom surface 220b0 of the first groove 220b1 to the first cover plate 220a. In an implementation, a cross-section of the support pillar 223 gradually decreases from the bottom surface of the first groove 220b1 to the first cover plate 220a. That is, the support pillar 223 is a tapered pillar.

To obtain a better heat dissipation effect, a material of the support pillar 223 may be copper.

To implement circulation of the working medium in the cavity and obtain a better heat dissipation effect, a capillary structure is formed in the housing cover provided in this embodiment of this application, to implement backflow of the working medium. The capillary structure may also be referred to as a wick structure or a microstructure. The wick structure may be a metal wire mesh, a microgroove, a fiber filament, or the like, or may be a sintered metal powder wick or a combination of several structures. Compared with the metal wire mesh, the microgroove, and the fiber filament, the sintered metal powder wick has several advantages, for example, low thermal resistance. In addition, because the sintered powder wick usually has a porosity of over 60%, the sintered powder wick has a relatively large evaporation surface area.

The following describes the capillary structure formed in the housing cover with reference to the accompanying drawings.

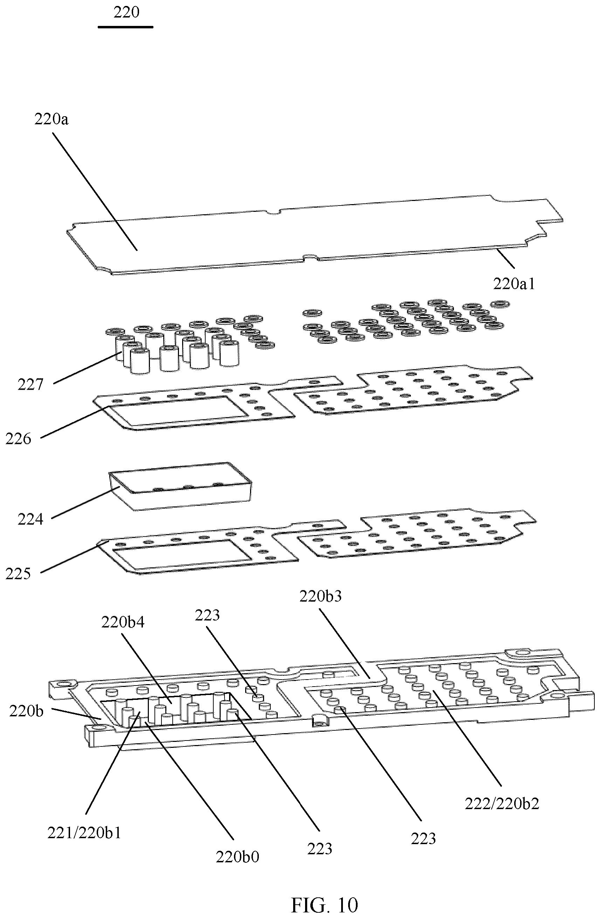

FIG. 10 is a diagram of a structure of a housing cover of an optical module according to an embodiment of this application. As shown in FIG. 10, in some embodiments, the housing cover 220 further includes a first capillary layer 224, and the first capillary layer 224 is provided on a surface 220b4 of the first groove 220b1.

A material of the first capillary layer 224 may be copper powder, and the copper powder is obtained through high-temperature sintering. A material of the second cover plate 220b may also be copper. In this way, the first capillary layer and the second cover plate are well combined.

The capillary structure can not only provided in the first groove 220b1, but can also be provided in another position in the housing cover 220.

For example, as shown in FIG. 10, in some embodiments, the housing cover 220 further includes a second capillary layer 226 and a third capillary layer 225. The first cover plate 220a includes a third surface 220a1 close to the second cover plate 220b and opposite to the second surface 220b3. The second capillary layer 226 is formed on the third surface 220a1. A material of the second capillary layer 226 may be copper powder, and the copper powder is obtained through high-temperature sintering. A material of the first cover plate 220a may also be copper. In this way, the second capillary layer 226 and the first cover plate 220a are well combined.

The third capillary layer 225 is formed on the second surface 220b3 of the second cover plate 220b. A material of the third capillary layer 225 may be copper powder, and the copper powder is obtained through high-temperature sintering. A material of the second cover plate 220b may also be copper. In this way, the third capillary layer 225 and the second cover plate 220b are well combined.

For another example, as shown in FIG. 10, in some embodiments, the housing cover 220 further includes a fourth capillary layer 227, and the fourth capillary layer 227 is formed on a side surface of the support pillar 223.

In an implementation, when the fourth capillary layer 227 is formed, the copper powder may be sintered into a powder ring structure and sleeved on the support pillar 223 by using a clamp.

In this way, heat can be transferred to the heat sink or dissipated to the air by means of a series of heat exchange, so as to implement heat dissipation. The optical module provided in this embodiment of this application is characterized by a small size and fast heat dissipation, and can meet a relatively high heat dissipation requirement.

When the first device 240 is an optical device and the second device 250 is an electrical chip, power consumption of the electrical chip may account for at least 70% of total power consumption of the entire optical module. Compared with an optical device, an electrical chip has a relatively high temperature specification. For example, a housing temperature specification of the electrical chip may be 95°C or higher. However, the optical device has low power consumption, and the optical device is not temperature-resistant. The housing temperature specification of the optical device may be 65°C or lower. In other words, when the optical device and the electrical chip operate, power consumption is different, and heat emitted by the optical device and the electrical chip is different. As a result, after the heat from the optical device and the electrical chip is transferred to the housing cover, the heat may be diffused. Because the heat from the electrical chip is greater than the heat from the optical device, the heat from the electrical chip may be transferred toward the optical device, and the optical device is baked by this part of heat. Consequently, the temperature of the optical device increases, which is unfavorable to heat dissipation of the optical module.

To resolve this problem, a thermal insulation structure is provided between the first cavity and the second cavity in the optical module provided in this embodiment of this application, to block heat exchange between the first cavity and the second cavity. The heat from the electrical chip does not cause thermal baking to the optical device. The following describes the thermal insulation structure with reference to the accompanying drawings.

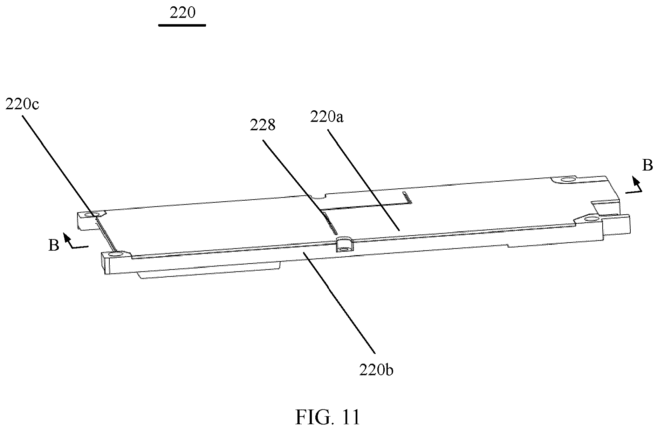

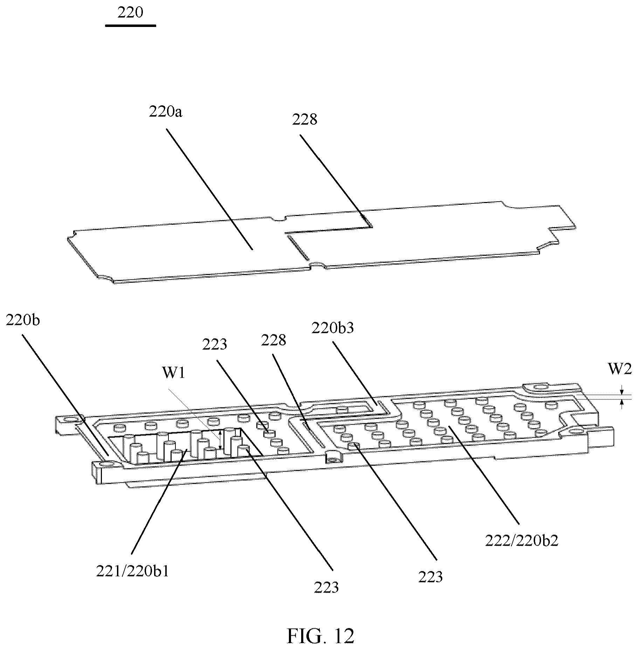

FIG. 11 is a diagram of a structure of a housing cover of an optical module according to an embodiment of this application. FIG. 12 is an exploded diagram of the housing cover of the optical module shown in FIG. 11. As shown in FIG. 11 and FIG. 12, in some embodiments, the housing cover 220 further includes a thermal insulation structure 228 provided between the first cavity 221 and the second cavity 222 and configured to block heat exchange between the first cavity 221 and the second cavity 222.

The thermal insulation structure may be implemented in a plurality of forms.

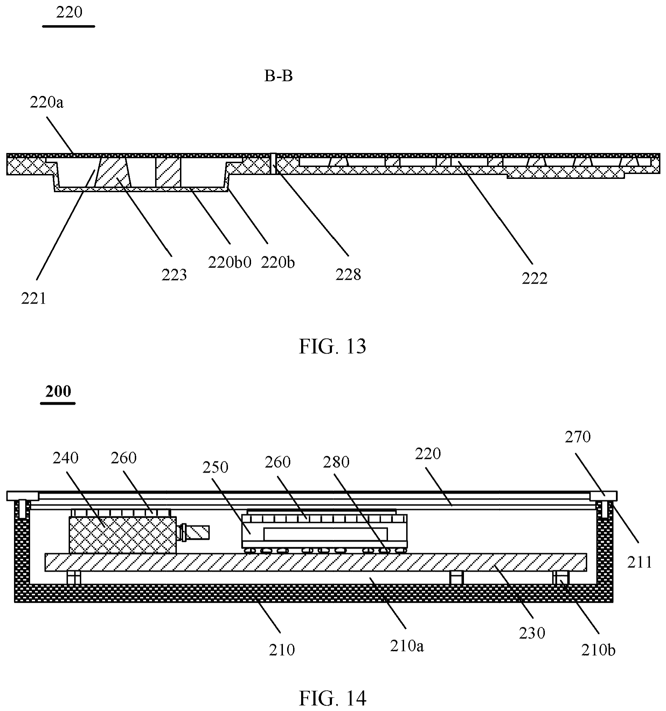

For example, the thermal insulation structure may be a thermal insulation hole. As shown in FIG. 13, the thermal insulation hole runs through the housing cover 220, making the first cavity 221 and the second cavity 222 not in communication with each other. The thermal insulation hole can be formed by machining.

For another example, the thermal insulation structure may also be a thermal insulation member made of a thermal insulation device.

In this way, a device in the optical module is protected, and it is ensured that performance of the device is not interfered by another device.

To better transfer heat to the housing cover, as shown in FIG. 14, in some embodiments, the optical module 200 further includes a thermally conductive layer 260. In an implementation, the thermally conductive layer 260 is disposed between the second device 250 and the housing cover 220. In another implementation, the thermally conductive layer 260 may be disposed only between the first device 240 and the housing cover 220.

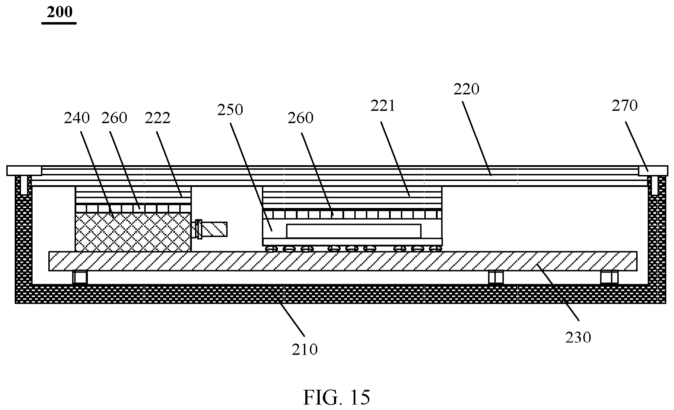

As shown in FIG. 15, in another implementation, the thermally conductive layer 260 is disposed between the first device 240 and the housing cover 220, and the thermally conductive layer 260 is disposed between the second device 250 and the housing cover 220.

The optical module provided in this embodiment of this application uses the structure of the housing cover to dissipate heat from the first device and the second device, thereby increasing the ways of heat dissipation and effectively improving heat dissipation efficiency of the optical module.

It may be understood that more than two devices may be disposed in the optical module, and more than two cavities may be correspondingly disposed in the housing cover, so as to improve heat dissipation efficiency of the optical module.

To meet process requirements such as anti-rust and waterproofing, surface processing may be performed on the housing body and the housing cover of the optical module.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. An optical module, comprising:
a housing body and a housing cover that are disposed opposite to each other, wherein
the housing body comprises a first surface close to the housing cover, and an accommodation groove extending in a direction away from the housing cover is provided on the first surface; and
a first device and a second device, which are disposed in the accommodation groove, wherein
a first cavity and a second cavity are formed in the housing cover, a working medium is provided in both the first cavity and the second cavity, and the first cavity and the second cavity are disposed in a direction parallel to the housing cover, wherein
the first device and the first cavity are disposed opposite to each other, and the second device and the second cavity are disposed opposite to each other.

2. The optical module according to claim 1, wherein the housing cover comprises a first cover plate and a second cover plate that are disposed opposite to each other, and the first cover plate is disposed on a side of the second cover plate that is away from the first device;
the second cover plate comprises a second surface close to the first cover plate, and a first groove that is recessed in a direction away from the first cover plate is provided on the second surface; and
the first cover plate and the second cover plate are connected in a sealed manner, so that the first groove of the second cover plate and the first cover plate jointly enclose the first cavity.

3. The optical module according to claim 2, wherein the housing cover further comprises a first capillary layer, and the first capillary layer is provided on a surface of the first groove.

4. The optical module according to claim 2 or 3, wherein the housing cover further comprises a second capillary layer and a third capillary layer;
the first cover plate comprises a third surface that is close to the second cover plate and opposite to the second surface, and the second capillary layer is formed on the third surface; and
the third capillary layer is formed on the second surface of the second cover plate.

5. The optical module according to any one of claims 2 to 4, wherein a support pillar is provided in the first groove, and the support pillar extends from a bottom surface of the first groove to the first cover plate.

6. The optical module according to claim 5, wherein the housing cover further comprises a fourth capillary layer, and the fourth capillary layer is formed on a side surface of the support pillar.

7. The optical module according to any one of claims 1 to 6, wherein the housing cover further comprises a thermal insulation structure provided between the first cavity and the second cavity; and
the thermal insulation structure is configured to block heat exchange between the first cavity and the second cavity.

8. The optical module according to claim 7, wherein the thermal insulation structure comprises a thermal insulation hole or a thermal insulation member made of a thermal insulation device.

9. The optical module according to claim 8, wherein the thermal insulation hole runs through the housing cover.

10. The optical module according to any one of claims 1 to 9, wherein the optical module further comprises a circuit board;
the circuit board is disposed at a bottom of the accommodation groove; and
both the first device and the second device are disposed on the circuit board, and the first device and the second device are located on a same side of the circuit board.

11. The optical module according to any one of claims 1 to 10, wherein the optical module further comprises a thermally conductive layer;
the thermally conductive layer is disposed between the first device and the housing cover;
and/or
the thermally conductive layer is disposed between the second device and the housing cover.

12. An optical communication system, comprising the optical module according to any one of claims 1 to 11.
